Europäisches Patentamt

European Patent Office

Office européen des brevets

(19)

(11) Numéro de publication : **0 009 447**

**B1**

(12)

# FASCICULE DE BREVET EUROPÉEN

(45) Date de publication du fascicule du brevet :
01.09.82

(51) Int. Cl.³ : **B 25 J 17/02**

(21) Numéro de dépôt : 79400648.6

(22) Date de dépôt : 17.09.79

(54) Articulation pour bras de manipulateur.

(30) Priorité : 20.09.78 FR 7826928
02.08.79 FR 7919845

(43) Date de publication de la demande :
02.04.80 (Bulletin 80/07)

(45) Mention de la délivrance du brevet :
01.09.82 Bulletin 82/35

(84) Etats contractants désignés :
AT BE CH DE GB IT LU NL SE

(56) Document cité :
GB A 980 044

(73) Titulaire : ASSOCIATION DES OUVRIERS EN INSTRU-
MENTS DE PRECISION
8 à 14 rue Charles Fourier
F-75013 Paris (FR)

(72) Inventeur : Lande, Maurice Albert
197 rue de Lourmel
F-75015 Paris (FR)
Inventeur : David, Roger Jean Paul
8 rue de la Papeterie
F-91610 Ballancourt (FR)

(74) Mandataire : Casanova, André et al
Cabinet Casanova et Akerman 23 Boulevard de
Strasbourg
F-75010 Paris (FR)

Imprimerie Jouve, 18, rue St-Denis, 75001 Paris, France

Articulation pour bras de manipulateur

La présente invention concerne une articulation pour bras de manipulateur.

Dans de nombreux domaines techniques, on utilise des manipulateurs automatiques, comportant chacun au moins un bras, portant à son extrémité un support d'outil. Des moyens sont prévus pour animer ce bras, généralement rigide, de mouvements divers ; il est cependant souvent indispensable d'accoupler le support d'outil avec l'extrémité du bras, rigide, par l'intermédiaire d'une articulation, permettant de donner à l'outil des orientations très variées par rapport à l'axe longitudinal du bras rigide.

On connaît déjà une articulation pour bras de manipulateur, qui est susceptible d'ébattements de grande amplitude, mais qui, présentant une structure complexe, est par suite coûteuse et peu fiable ; cette articulation connue est en effet constituée essentiellement par des sortes de « vertèbres », articulées les unes sur les autres ; on conçoit que la motorisation d'une telle articulation, pour la commande automatique de l'orientation de l'outil, nécessite des moyens complexes et difficiles à mettre en œuvre.

Tout en permettant des ébattements de grande amplitude, l'articulation pour bras de manipulateur selon la présente invention offre une structure très simple, qui lui confère une grande robustesse, et un prix de revient réduit.

L'articulation pour bras de manipulateur selon la présente invention est caractérisée en ce qu'elle comporte essentiellement deux plateaux, par exemple deux couronnes, reliés entre eux par au moins deux biellettes, dont les extrémités sont accouplées avec lesdits plateaux par des joints à deux degrés de liberté.

En raison de la simplicité de sa structure, l'articulation pour bras de manipulateur selon la présente invention peut être facilement motorisée : pour commander des déplacements de la première couronne par rapport à la seconde, deux tiges de commande, par exemple les tiges de deux vérins, peuvent être disposées de manière à traverser librement la seconde couronne, et à attaquer respectivement, par l'intermédiaire de joints à deux degrés de liberté, des appendices coudés des extrémités correspondantes de deux des biellettes. En outre, dans une forme de réalisation préférée de l'articulation selon la présente invention, la première couronne porte en son centre un support d'outil, monté sur un premier pivot, coaxial et traversant ladite première couronne, l'axe d'un vérin rotatif attaque un second pivot, coaxial et porté par la seconde couronne, en son centre, et lesdits premier et second pivots sont accouplés l'un à l'autre par l'intermédiaire de deux joints de Cardan et d'au moins une tige, de manière à commander des rotations du support d'outil autour de l'axe de ladite première couronne.

A titre d'exemple, on a décrit ci-dessous et illustré schématiquement au dessin annexé une forme de réalisation de l'articulation pour bras manipulateur selon la présente invention.

La figure 1 est une vue en perspective de l'extrémité d'un bras manipulateur, à laquelle un outil, notamment un pistolet de peinture, et son support sont réunis par l'intermédiaire d'une articulation selon la présente invention.

Les figures 2 et 3 montrent la structure interne de l'articulation représentée sur la figure 1, pour deux positions différentes de l'outil par rapport au bras du manipulateur.

La figure 4 illustre une autre forme de réalisation de l'invention.

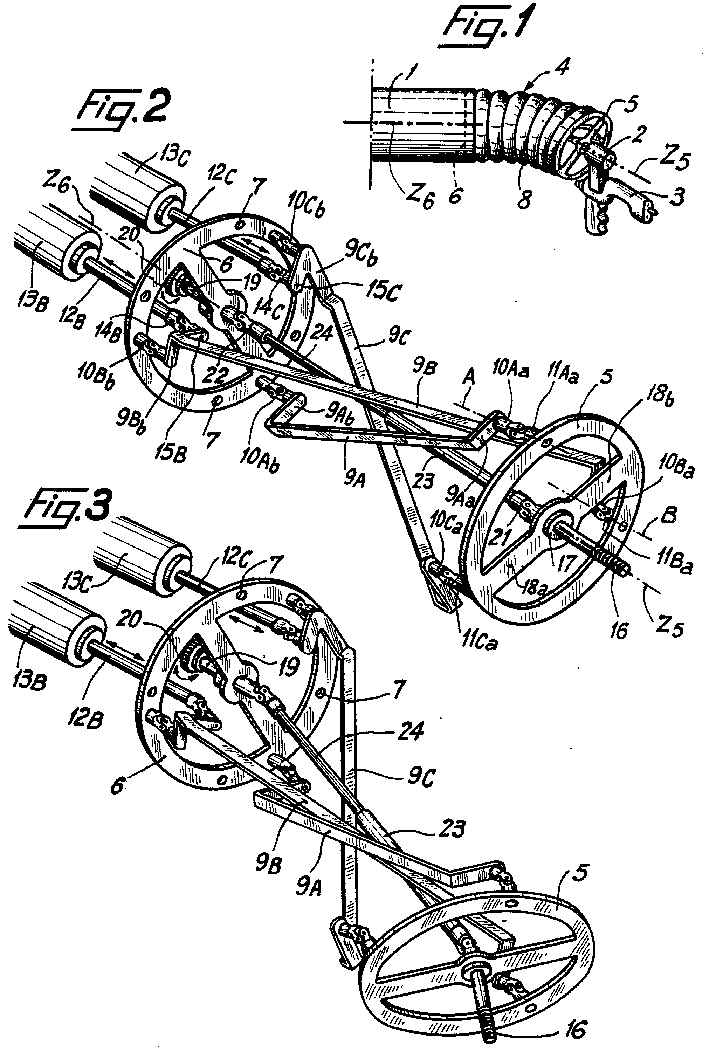

Sur la figure 1, 1 désigne l'extrémité du bras rigide d'un manipulateur, par exemple d'un automate de peinture ; ce bras 1 est constitué par exemple par un tube métallique, à l'intérieur duquel sont disposés différents organes de commande, qui seront précisés ultérieurement. Un support 2, auquel est fixé un pistolet de peinture 3, d'un type courant, est accouplé avec l'extrémité du bras 1 du manipulateur par l'intermédiaire d'une articulation selon la présente invention, dont l'ensemble a été désigné par 4 sur la figure 1. Cette articulation selon la présente invention comporte essentiellement une première couronne 5 (voir aussi les figures 2 et 3), au centre de laquelle est monté le support 2 du pistolet 3, une seconde couronne, 6, qui est fixée dans l'extrémité ouverte du bras tubulaire 1, par exemple au moyen de boulons engagés dans des perçages appropriés (7 sur les figures 2 et 3) de ladite couronne 6, ainsi qu'un manchon déformable 8, dont les extrémités sont fixées, par tous moyens appropriés, aux faces en regard des couronnes 5 et 6 ; ce manchon déformable 8 est seulement destiné à protéger les organes mécaniques de l'articulation 4, qui sont visibles sur les figures 2 et 3 ; il n'est pas nécessaire d'en décrire la constitution en détail, car il en existe plusieurs réalisations connues, équivalentes.

Comme visible sur les figures 2 et 3, les deux couronnes 5 et 6 de l'articulation selon la présente invention sont reliées entre elles par trois biellettes, 9A à 9C, dont les extrémités sont coudées (par exemple 9Aa et 9Ab pour la biellette 9A), et sont accouplées respectivement avec les couronnes 5 et 6 par six joints de Cardan ; on voit clairement par exemple sur la figure 2 que les extrémités coudées 9Aa et 9Ab de la biellette 9A sont accouplées respectivement avec les couronnes 5 et 6 par les joints de Cardan 10Aa et 10Ab.

Selon une autre caractéristique de l'invention, les supports, 11Aa et 11Ba, de deux des trois joints de Cardan, associés à la couronne 5 de l'articulation 4, sont montés sur ladite couronne 5 de façon à pouvoir pivoter autour d'axes, A et B respectivement, qui sont sensiblement parallèles à l'axe $Z_5$ de ladite couronne 5. Par contre, le support 11Ca du troisième joint de Cardan, 10Ca, associé à la même couronne 5, est fixé rigidement, par tous moyens appropriés, sur ladite couronne 5. Il en va de même pour les supports des trois joints de Cardan, 10Ab à 10Cb, qui sont fixés sur la couronne 6.

Pour commander des déplacements de la couronne 5 par rapport à la couronne 6, deux tiges de commande, par exemple les tiges 12B et 12C de deux vérins hydrauliques, 13B et 13C, traversent le bras tubulaire 1 (où lesdits vérins 13B et 13C sont éventuellement montés), ainsi que la couronne 6 ; les extrémités desdites tiges de commande, 12B et 12C, attaquent respectivement, par l'intermédiaire de joints de Cardan 14B et 14C, des appendices coudés, 15B et 15C, des extrémités correspondantes, 9Bb et 9Cb, des deux biellettes 9B et 9C.

D'autre part, dans la forme de réalisation considérée, le support d'outil 2 (figure 1) est fixé sur un premier pivot 16, qui est monté tournant autour de l'axe $Z_5$ de la couronne 5, dans un palier 17, supporté lui-même, au centre de ladite couronne 5, par exemple par deux bras radiaux 18a et 18b. Un second pivot 19 est monté de la même façon au centre de la couronne 6, coaxialement à son axe $Z_6$. L'extrémité de ce second pivot 19, qui se trouve du côté de la couronne 6 opposé à l'articulation 4, et par suite à l'intérieur du bras tubulaire 1, est accouplée en rotation, par tous moyens appropriés, par exemple par un pignon 20, avec un organe de commande en rotation, par exemple l'axe d'un vérin rotatif (non représenté). Les extrémités des premier et second pivots, 16 et 19, qui sont tournées l'une vers l'autre, c'est-à-dire vers l'intérieur de l'articulation 4, sont accouplées l'une avec l'autre par l'intermédiaire de deux joints de Cardan 21 et 22, et de deux tiges télescopiques, 23 et 24, plus précisément, dans la forme de réalisation considérée, le joint de Cardan 21 est inséré entre l'extrémité intérieure du premier pivot 16 et l'extrémité correspondante de la tige creuse 23, tandis que le joint de Cardan 22 est inséré entre l'extrémité intérieure du second pivot 19 et l'extrémité correspondante de la tige 24, dont l'autre extrémité est montée librement coulissante dans la tige creuse 23. L'ensemble 20-19-22-24-23-21-16 constitue un joint homocinétique, par l'intermédiaire duquel une rotation d'un angle quelconque de l'axe du vérin rotatif (non représenté) est transmise au support 2 du pistolet 3 sous la forme d'une rotation de même angle dudit support 2 autour de l'axe $Z_5$ de la couronne 5, quand l'arbre d'entrée et l'arbre de sortie sont parallèles.

Comme on le voit en comparant les figures 2 et 3, les mouvements de translation des deux tiges de vérin 12B et 12C, parallèlement à l'axe $Z_6$ de la couronne 6, commandent des déplacements de la couronne 5 par rapport à ladite couronne 6, par l'intermédiaire des trois biellettes 9A à 9C et des six joints de Cardan associés à leurs extrémités respectives. Ces déplacements de la couronne 5, portant le pistolet 3 et son support 2, permettent de donner à l'axe dudit support (l'axe $Z_5$ de la couronne 5), et par suite à la direction de visée du pistolet 3, une orientation choisie à volonté par rapport à celle de l'axe, $Z_6$, du bras 1 du manipulateur ; un degré de liberté supplémentaire est obtenu en faisant pivoter le pistolet 3 et son support 2 sur le premier pivot 16 (c'est-à-dire autour de l'axe $Z_5$), grâce à un actionnement approprié du vérin rotatif attaquant le pignon 20. Cette articulation autorise des ébattements de grande amplitude du pistolet 3 et de son support, lorsque notamment ladite articulation est munie de joints de Cardan dont chaque articulation permet elle-même un ébattement angulaire important.

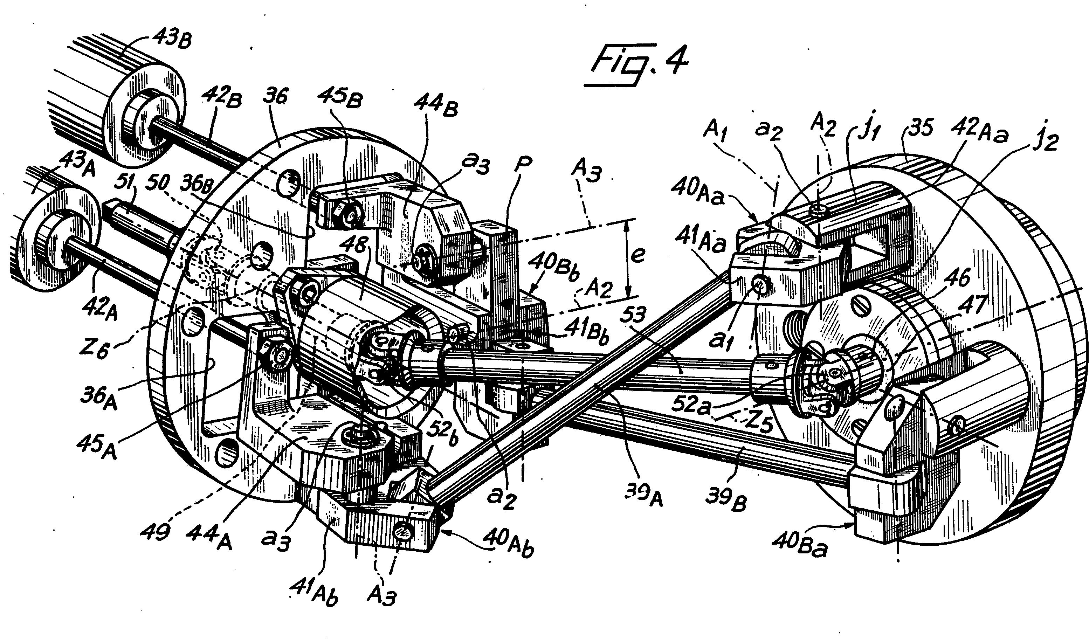

L'articulation selon la présente invention, qui est illustrée sur la figure 4, comporte essentiellement un premier plateau 35, au centre duquel peut être monté par exemple le support d'un pistolet de peinture, et un second plateau 36, qui peut être fixé dans l'extrémité ouverte d'un bras tubulaire, comme illustré sur la figure 1. Les deux plateaux 35 et 36 sont reliés entre eux par deux biellettes, 39A et 39B, dont les extrémités sont accouplées avec lesdits plateaux 35 et 36, par quatre joints, comportant chacun deux pivots à axes non-concourants ; on voit clairement que, par exemple, les extrémités de la biellette 39A sont accouplées respectivement avec les plateaux 35 et 36 par des joints 40Aa et 40Ab. Chacun des quatre joints 40Aa à 40Bb comporte une chape mobile, par exemple 41Aa, montée sur l'extrémité de la biellette correspondante, 39A, de façon à pivoter autour d'un premier axe, A1 ; la chape mobile 41Aa est elle-même montée dans un palier 42Aa, solidaire du plateau 35 correspondant, de façon à pivoter autour d'un second axe, A2, qui n'est pas concourant avec le premier axe A1, mais lui est cependant sensiblement orthogonal. Le palier de chaque joint, tel que 42Aa, comporte une chape fixe, dont la base est solidaire du plateau correspondant 35, et dont les deux joues, j1 et j2, s'étendent dans une direction sensiblement parallèle à celle de l'axe, Z5, dudit plateau 35 ; l'axe géométrique de pivotement A2 est alors matérialisé par un bout d'arbre a2, dont la partie médiane traverse la chape mobile 41Aa, et dont les extrémités sont engagées respectivement dans les deux joues, j1 et j2, de la chape fixe 42Aa ; comme le bout d'arbre a2 est perpendiculaire aux joues, j1 et j2, de la chape fixe 42Aa, son axe géométrique A2 est orthogonal à l'axe géométrique Z5 du plateau circulaire 35. Quant au premier axe de pivotement, A1, du joint 40Aa, il est matérialisé par un bout d'arbre a1, dont la partie médiane traverse l'extrémité évasée correspondante de la biellette 39A, et dont les extrémités sont engagées dans des perçages correspondants des deux branches de la chape mobile 41Aa ; comme les plans médians des fentes respectives de la chape mobile 41Aa et de la chape fixe 42Aa sont sensiblement perpendiculaires l'un à l'autre ainsi qu'aux deux axes de pivotement A1 et A2, respectivement, ces derniers sont bien orthogonaux l'un à l'autre. Les joints 40Ba, 40Ab et 40Bb ont des constitutions analogues, qu'il n'est donc pas nécessaire de décrire en détail.

Selon une autre caractéristique de l'invention, pour commander les déplacements du premier plateau, 35, par rapport au second plateau, 36, deux tiges de commande, 42A et 42B, par exemple les tiges de deux vérins, 43A et 43B, sont disposées de façon à s'étendre sensiblement dans la direction de l'axe Z6 dudit second plateau 36, et à traverser celui-ci librement par des ouvertures appropriées, par exemple des fenêtres rectangulaires, 36A et 36B. Ces tiges de vérin, 42A et 42B, attaquent respectivement, par leurs extrémités, la chape mobile 41Ab du joint 40Ab et un prolongement P de la chape mobile 41Bb du joint 40Bb. En fait, chaque tige de vérin, 42A ou 42B, est accouplée à la chape mobile du joint correspondant par l'intermédiaire d'une pièce coudée, 44A ou 44B ; l'une des deux ailes de chaque pièce coudée, par exemple 44A, est assujettie à l'extrémité libre de la tige de vérin correspondante, 42A, par exemple par un boulon 45A, tandis que l'autre aile de la même pièce coudée, 44A est montée à pivot sur la chape mobile, 41Ab, du joint correspondant, 40Ab, au moyen d'un bout d'arbre a3, dont l'axe géométrique, A3, est également orthogonal à l'axe Z6 du second plateau 36, et parallèle au second axe de pivotement de la chape mobile 41Ab (désigné par A2 pour les chapes mobiles 41Aa et 41Bb). Ces deux axes parallèles de pivotement ne sont pas confondus, mais présentent un écartement prédéterminé, qui a été désigné par e dans le cas du joint 40Bb.

D'autre part, comme dans la forme de réalisation illustrée aux figures 2 et 3, le support d'outil (non visible sur la figure 4), est fixé sur un premier pivot 46, qui est monté tournant autour de l'axe Z5 du plateau 35, dans un palier 47, traversant lui-même la partie centrale dudit plateau 35. Un second pivot, 49, est monté de la même façon, dans un palier 48, au centre du plateau 36, coaxialement à son axe Z6. L'extrémité de ce second pivot 49, qui se trouve du côté du plateau 36, opposé à l'articulation, est accouplée en rotation, par l'intermédiaire d'un joint de Cardan, 50, et d'un axe, 51, avec un organe de commande en rotation, par exemple l'axe d'un vérin rotatif, ou d'un autre moteur rotatif (non représenté). Les extrémités des premier et second pivots, 46 et 49, qui sont tournées l'une vers l'autre, c'est-à-dire vers l'intérieur de l'articulation, sont accouplées l'une avec l'autre par l'intermédiaire de deux joints de Cardan, 52a et 52b, et d'une tige rigide, 53. A la différence de la réalisation illustrée aux figures 2 et 3, cette tige rigide 53 n'est pas télescopique. L'ensemble 51-50-49-52b-53-52a-46 constitue un joint homocinétique, par l'intermédiaire duquel une rotation, d'un angle quelconque, de l'axe du vérin rotatif (non représenté) est transmise au support d'outil sous la forme d'une rotation, de même angle, dudit support autour de l'axe Z5 du plateau 35, quand l'arbre d'entrée et l'arbre de sortie sont parallèles.

Le mode de fonctionnement de l'articulation pour bras de manipulateur qui vient d'être décrit est analogue à celui de la forme de réalisation illustrée aux figures 2 et 3.

L'articulation pour bras de manipulateur selon la présente invention est susceptible d'autres formes de réalisation, entrant toutes dans le cadre de l'invention. Dans le cas de la réalisation illustrée sur les figures 2 et 3, le nombre et la disposition de ceux des six joints de Cardan, associés aux deux couronnes 5 et 6, dont les supports sont montés sur lesdites couronnes de façon à pouvoir pivoter, sont matières à option. Il en va de même de la disposition, sur le pourtour de chacune des couronnes 5 et 6, des supports des trois joints de Cardan qui lui sont associés : dans la forme de réalisation illustrée sur les figures 2 et 3, les supports des trois joints de Cardan associés à une même couronne, 5 ou 6, sont disposés sensiblement aux sommets d'un triangle équilatéral ; à titre de variante, ils pourraient être disposés aux sommets d'un triangle rectangle isocèle ou d'un triangle d'une autre forme. Dans le cas de la réalisation illustrée sur la figure 4, la disposition, sur le pourtour de chacun des plateaux 35 et 36 des joints correspondants, par exemple 40Aa et 40Ba, est aussi matière à option ; cependant, de préférence les deux joints sont disposés, comme illustré, aux extrémités d'un arc voisin de 90 degrés. La réalisation du palier de chacune des chapes 41Aa et 41Bb est matière à option, ainsi que son mode de fixation sur le plateau correspondant, 35 ou 36. Le mode d'accouplement de l'extrémité de chaque tige de vérin ou de moteur avec la chape mobile du joint correspondant est matière à option. Au lieu de comporter une chape mobile, chacun des joints 40Aa et 40Bb peut être d'un autre type connu, comportant deux pivots à axes non-concourants. Au lieu d'être commandés à partir de vérins ou de moteurs équivalents, les organes de commande tels que 12B, 12C et 20 (figure 2) pourraient être actionnés manuellement, au moyen d'une tringlerie, ou de câbles coulissant dans des gaines fixes, de façon connue en soi ; ces dernières réalisations ne sont évidemment utilisables que pour commander les déplacements d'outils relativement légers. Le montage à pivot du support 2 de l'outil et les moyens de commande de ses pivotements sont facultatifs. Enfin, l'articulation selon la présente invention peut être également utilisée en l'absence d'organes de commande, motorisée ou manuelle, notamment, lorsque l'outil, par exemple le pistolet 3, doit être guidé directement par la main de l'opérateur, l'articulation 4 servant alors seulement à le relier en permanence à un bras de contrôle ou d'alimentation ; dans ce dernier cas, s'il s'agit d'un outil lourd, l'effort de l'opérateur peut être soulagé par un dispositif ressemblant à celui illustré sur les figures 2 et 3, et précédemment décrit, mais dans lequel les cylindres 13B et 13C correspondent à des amortisseurs, par exemple hydrauliques, dimensionnés de façon à équilibrer le poids de l'articulation et de l'outil. Avec cette dernière disposition, lorsque l'opérateur lâche l'outil, celui-ci est maintenu dans la position qu'il occupait précédemment. Un amortissement analogue peut être prévu pour la rotation du support 2 de l'outil sur son pivot 16.

L'articulation selon la présente invention peut être adaptée au bras d'un manipulateur quelconque, par exemple d'un automate de peinture, d'oxydécoupage de soudure etc.... En outre, elle peut non seulement être insérée entre l'extrémité du bras, et le support d'outil (à la façon d'un poignet), mais aussi être insérée entre deux parties rigides d'un même bras (à la façon d'un coude) ou encore entre un bras rigide et son support fixe (à la façon d'une épaule).

## Revendications

1. Articulation pour bras de manipulateur, caractérisée en ce qu'elle comporte deux plateaux (35, 36), par exemple deux couronnes (5, 6), reliés entre eux par au moins deux biellettes (39A, 39B), dont les extrémités sont accouplées avec lesdits plateaux (35, 36) par des joints (40Aa, 40Ab, 40Ba, 40Bb) à deux degrés de liberté.

2. Articulation selon la revendication 1, caractérisée en ce que les deux couronnes (5, 6) sont reliées entre elles par trois biellettes (9A, 9B, 9C) dont les extrémités (9Aa, 9Ab, 9Ba, 9Bb, 9Ca, 9Cb) sont coudées, et accouplées avec lesdites couronnes (5,6) par six joints de cardan (10Aa, 10Ab, 10Ba, 10Bb, 10Ca, 10Cb).

3. Articulation selon la revendication 2, caractérisée en ce que les supports (11Aa, 11Ba) de deux (10Aa, 10Ba) des trois joints de cardan (10Aa, 10Ba, 10Ca) associée à l'une (5) des deux couronnes (5, 6) sont montés sur celle-ci de façon à pouvoir pivoter autour d'axes (A, B) sensiblement parallèles à celui (Z5) de ladite couronne (5).

4. Articulation selon l'une quelconque des revendications 2 et 3, caractérisée en ce que, pour commander des déplacements de la première couronne (5) par rapport à la seconde (6), deux tiges de commande, par exemple les tiges (12B, 12C) de deux moteurs linéaires tels que des vérins (13B, 13C) traversent librement la seconde couronne (6) et attaquent respectivement, par l'intermédiaire de joints de cardan (14B, 14C) des appendices coudés (15B, 15C) des extrémités (9Bb, 9Cb) correspondantes de deux (9B, 9C) des trois biellettes (9A, 9B, 9C).

5. Articulation selon la revendication 1, caractérisée en ce que le premier plateau (35) porte en son centre un support d'outil, monté sur un premier pivot (46), que l'axe d'un moteur rotatif tel qu'un vérin rotatif, attaque un second pivot (49) coaxial à et porté par le second plateau (36), en son centre, et que lesdits premier et second plateau (36), en son centre, et que lesdits premier et second pivots (46, 49) sont accouplés l'un avec l'autre par l'intermédiaire d'au moins deux joints de cardan (52a, 52b) et d'au moins une tige (53), de manière à commander des rotations du support d'outil autour de l'axe (Z5) dudit premier plateau (35).

6. Articulation selon la revendication 5, caractérisée en ce que la tige d'accouplement des deux pivots est une tige télescopique.

7. Articulation selon la revendication 1, caractérisée en ce que l'un au moins des joints (40Aa, 40Ab, 40Ba, 40Bb) comporte une chape (41Aa, 41Ab, 41Ba, 41Bb) montée sur l'extrémité de la biellette (39A, 39B) correspondante de façon à pivoter autour d'un premier axe (A1), ladite chape (41Aa, 41Ab, 41Ba, 41Bb) étant elle-même montée dans un palier (42Aa) solidaire du plateau (35) correspondant, de façon à pivoter autour d'un second axe (A2), non concourant avec le premier axe (A1).

8. Articulation selon la revendication 7, caractérisée en ce que les deux axes (A1, A2) de pivotement du joint (40Aa) sont sensiblement orthogonaux l'un à l'autre.

9. Articulation selon l'une quelconque des revendications 7 et 8, caractérisée en ce que le palier (42Aa) du joint (40Aa) comporte une chape, dont la base est solidaire du plateau (35) correspondant, et dont les joues (j1, j2) s'étendent dans une direction sensiblement parallèle à celle de l'axe (Z5) dudit plateau (35), de manière que le second axe de pivotement (A2) dudit joint (40Aa) soit sensiblement orthogonal à l'axe (Z5) dudit plateau (35).

10. Articulation selon l'une quelconque des revendications 7 à 9, caractérisée en ce que, pour commander les déplacements du premier plateau (35) par rapport au second (36), deux tiges de commande, par exemple les tiges (42A, 42B) de deux moteurs linéaires tels que des vérins (43A, 43B), traversent librement des ouvertures appropriées (36A, 36B) du second plateau (36), et attaquent chacune la chape (41Ab, 41Bb) de l'un des deux joints (40Ab, 40Bb) correspondants, ou un prolongement (P) de ladite chape (41Bb), en un point de cette dernière, ou de son prolongement (P), qui se trouve à une distance (e) prédéterminée de l'axe de pivotement (A2) de la chape (41Bb) dans son palier.

11. Articulation selon la revendication 10, caractérisée en ce que la tige (42A, 42B) de chaque vérin (43A, 43B) est accouplée à la chape (41Ab, 41Bb) du joint correspondant (40Ab, 40Bb) par l'intermédiaire d'une pièce coudée (44A, 44B) solidaire de ladite tige (42A, 42B) de vérin, et montée à pivot sur ladite chape (41Ab, 41Bb) ou son prolongement (P).

## Claims

1. Articulated joint for manipulator arm, characterized in that it comprises two plates (35, 36), for example two crowns (5, 6), connected to each other by at least two bars (39A, 39B), the ends of which are coupled to said plates (35, 46) by joints (40Aa, 40Ab, 40Ba, 40Bb) having two degrees of freedom.

2. Articulated joint according to claim 1, characterised in that the two crowns (5, 6) are connected to each other by three bars (9A, 9B, 9C), the ends of which (9Aa, 9Ab, 9Ba, 9Bb, 9Ca, 9Cb) are angled, and are coupled to said crowns (5, 6) by six cardan joints (10Aa, 10Ab, 10Ba, 10Bb, 10Ca, 10Cb).

3. Articulated joint according to claim 2, characterised in that the supports (11Aa, 11Ba) of two (10Aa, 10Ba) of the three cardan joints (10Aa, 10Ba, 10Ca) associated with one (5) of the two crows (5, 6) are mounted on that crown in such a manner that they can pivot about axes (A, B) approximately parallel to the axis (Z5) of said crown (5).

4. Articulated joint according to any one of claims 2 or 3, characterized in that, to actuate the displacements of the first crown (5) with respect to the second (6), two actuating rods, for example the rods (12B, 12C) of two means causing linear motion such as jacks (13B, 13C), traverse the second crown (6) freely and, by means of cardan joints (14B, 14C), drive the angled appendices (15B, 15C, respectively) of the corresponding ends (9Bb, 9Cb) of two (9B, 9C) of the three bars (9A, 9B, 9C).

5. Articulated joint according to claim 1, characterised in that the first plate (35) has at its centre a tool support mounted on a first shaft (46) which is coaxial with and traverses said first plate (35), the shaft of a rotary motor, such as a rotary jack, drives a second shaft (49) coaxial with and borne by the second plate (36) at its centre, and said first and second shafts (46, 49) are coupled to each other by means of at least two cardan joints (52a, 52b) and by at least one rod (53) in such a manner that they cause the tool support to rotate about the axis (Z5) of said first plate (35).

6. Articulated joint according to claim 5, characterised in that the coupling rod of the two shafts is a telescopic rod.

7. Articulated joint according to claim 1, characterised in that at least one of the joints (40Aa, 40Ab, 40Ba, 40Bb) comprises a fork joint (41Aa, 41Ab, 41Ba, 41Bb) mounted on the end of the corresponding bar (39A, 39B) in such a manner that the bar pivots about a first axis (AI), said fork joint (41Aa, 41Ab, 41Ba, 41Bb) being itself mounted in a bearing (42Aa) integral with the corresponding plate (35) in such a manner that it pivots about a second axis (A2) which does not converge with the first axis (A1).

8. Articulated joint according to claim 7, characterised in that the two axes (A1, A2) of pivoting of the joint (40Aa) are approximately orthogonal to each other.

9. Articulated joint according to any one of claims 7 or 8, characterised in that the bearing (42Aa) of the joint (40Aa) comprises a fork joint, the base of which is integral with the corresponding plate (35) and the cheeks (j1, j2) of which extend in a direction approximately parallel with that of the axis (Z5) of said plate (35), in such a manner that the second axis of pivoting (A2) of said joint (40Aa) is approximately orthogonal to the axis (Z5) of said plate (35).

10. Articulated joint according to any one of claims 7 to 9, characterised in that to actuate the displacements of the first plate (35) with respect to the second (36), two actuating rods, for example the rods (42A, 42B) of two means causing linear motion such as jacks (43A, 43B), traverse freely appropriate openings (36A, 36B) of the second plate (36) and each drives the fork joint (41Ab, 41Bb) of one of the two corresponding joints (40Ab, 40Bb), or an extension (P) of said fork joint (41Bb), in a point of the latter, or of its extension (P), which is at a predetermined distance (e) from the axis of pivoting (A2) of the fork joint (41Bb) in its bearing.

11. Articulated joint according to claim 10, characterised in that the rod (42A, 42B) of each jack (43A, 43B) is coupled to the fork joint (41Ab, 41Bb) of the corresponding joint (40Ab, 40Bb) by means of an angled piece (44A, 44B) integral with said jack rod (42A, 42B) and pivotally mounted on said fork joint (41Ab, 41Bb) or its extension (P).

### Ansprüche

1. Gelenk für einen mechanischen Hilfsarm, dadurch gekennzeichnet, daß dieser zwei Platten (35, 36) aufweist, insbesondere zwei Ringe (5, 6), die unter sich durch mindestens zwei Spurstangen (39A, 39B) verbunden sind, deren Enden mit den Platten (35, 36) über Verbindungselemente (40Aa, 40Ab, 40Ba, 40Bb) mit zwei Freiheitsgraden gekuppelt sind.

2. Gelenk nach Anspruch 1, dadurch gekennzeichnet, daß die beiden Ringe (5, 6) mit drei Spurstangen (9A, 9B, 9C) untereinander verbunden sind, deren Enden (9Aa, 9Ab, 9Ba, 9Bb, 9Ca, 9Cb) gebogen und mit den Ringen (5, 6) durch sechs Kardangelenke (10Aa, 10Ab, 10Ba, 10Bb, 10Ca, 10Cb) verbunden sind.

3. Gelenk nach Anspruch 2, dadurch gekennzeichnet, daß die Trageinrichtungen (11Aa, 11Ba) von zwei (10Aa, 10Ba) der drei Kardangelenke (10Aa, 10Ba, 10Ca), die an einem (5) der beiden Ringe (5, 6) sitzen, an diesem so angeordnet sind, daß sie um Achsen (A, B) schwenken können, die im wesentlichen parallel zu der Achse (Z5) des Ringes (5) sind.

4. Gelenk nach einem der Ansprüche 2 und 3, dadurch gekennzeichnet, daß zur Steuerung der Ortsveränderung des ersten Ringes (5) gegenüber dem zweiten (6) zwei Steuerstangen, insbesondere die Stangen (12B, 12C) von zwei Linearmotoren, wie beispielsweise Druckzylindern (13B, 13C), frei durch den zweiten Ring (6) hindurchgeführt sind und jeweils über ein Kardangelenk (14B, 14C) mit den abgebogenen Ansätzen (15B, 15C) der entsprechenden Enden (9Bb, 9Cb) von zwei (9B, 9C) der drei Spurstangen (9A, 9B, 9C) verbunden sind.

5. Gelenk nach Anspruch 1, dadurch gekennzeichnet, daß die erste Platte (35) in ihrer Mitte mit einem Werkzeugsupport versehen ist, der auf einem ersten Schwenkstift (46) angeordnet ist, der koaxial durch die erste Platte (35) verläuft, daß die Achse eines Rotationsmotors, wie beispielsweise ein Rotationszylinder, an einem zweiten Schwenkstift (49) angreift, der koaxial in der Mitte der zweiten Platte (36) getragen ist und daß der erste und der zweite Schwenkstift (46, 49) untereinander durch mindestens zwei Kardangelenke (52a, 52b) und mindestens eine Steuerstange (53) derart verbunden sind, daß die Drehbewegungen des Werkzeugsupports um die Achse (Z5) der ersten Platte (35) steuerbar sind.

6. Gelenk nach Anspruch 5, dadurch gekennzeichnet, daß die Kupplungsstange der beiden Schwenkstifte eine Teleskopstange ist.

7. Gelenk nach Anspruch 1, dadurch gekennzeichnet, daß mindestens eines der Gelenke (40Aa, 40Ab, 40Ba, 40Bb) mit einer Gabel (41Aa, 41Ab, 41Ba, 41Bb) versehen ist, die auf einem Ende der zugeordneten Spurstange (39A, 39B) so angeordnet ist, daß sie um eine erste Achse (A1) schwenkbar ist und daß diese Gabel (41Aa, 41Ab, 41Ba, 41Bb) selbst in einem an der zugeordneten Platte (35) fest angeordneten Lager (42Aa) montiert ist, und zwar so, daß sie um eine zweite, nicht mit der ersten Achse (A1) übereinstimmende Achse (A2) rotieren kann.

8. Gelenk nach Anspruch 7, dadurch gekennzeichnet, daß die beiden Schwenkachsen (A1, A2) des Verbindungsgelenkes (40Aa) im wesentlichen senkrecht aufeinanderstehen.

9. Gelenk nach einem der Ansprüche 7 und 8, dadurch gekennzeichnet, daß das Lager (42Aa) der Gelenkverbindung (40Aa) mit einer Gabel versehen ist, deren Basis fest an der zugeordneten Platte (35) angeordnet ist und deren Seitenwangen (J1, j2) sich in einer Richtung erstrecken, die im wesentlichen parallel zu der Achse (Z5) der Platte (35) verläuft, so daß die zweite Schwenkachse (A2) des Verbindungsgelenkes (40Aa) im wesentlichen senkrecht auf der Achse (Z5) der Platte (35) steht.

10. Gelenk nach einem der Ansprüche 7 bis 9, dadurch gekennzeichnet, daß zur Steuerung der Ortsveränderung der ersten Platte (35) gegenüber der zweiten (36) zwei Steuerstangen vorgesehen sind, beispielsweise die Kolbenstangen (42A, 42B) von zwei als Druckzylinder (43A, 43B) ausgebildeten Linearmotoren, daß diese Steuerstangen frei durch entsprechende Öffnungen (36A, 36B) der zweiten Platte (36) hindurchgeführt sind und jeweils mit der Gabel (41Ab, 41Bb) eines der beiden Verbindungsgelenke (40Ab, 40Bb) verbunden sind oder mit einer Verlängerung (P) der Gabel (41Bb) in einem Punkt verbunden sind, der sich in einem bestimmten Abstand (e) von der Schwenkachse (A2) der Gabel (41Bb) in deren Lager befindet.

11. Gelenk nach Anspruch 10, dadurch gekennzeichnet, daß die Kolbenstange (42A, 42B) jedes Druckzylinders (43A, 43B) mit der Gabel (41Ab, 41Bb) des entsprechenden Gelenkes (40Ab, 40Bb) über ein abgebogenes Stück (44A, 44B) verbunden ist, das einstückig an der Kolbenstange (42A, 42B) des Druckzylinders sitzt und schwenkbar an der Gabel (41Ab, 41Bb) oder deren Verlängerung (P) angeordnet ist.

0 009 447

Fig.1

Fig.2

Fig.3

Fig. 4